# EUROPÄISCHE PATENTSCHRIFT

(11) **EP 1 139 741 B1**
(45) Veröffentlichungstag und Bekanntmachung des Hinweises auf die Patenterteilung: **09.04.2003**
(21) Anmeldenummer: 99965465.0
(22) Anmeldetag: 14.12.1999
(51) Int. Cl.: A01N 31/08, A01N 29/00

(54) **PHENOLDERIVATE ENTHALTENDE SUSPENSION ODER DISPERSOIN MIT TIEFEM GEFRIERPUNKT**
SUSPENSION OR DISPERSION CONTAINING PHENOL DERIVATIVES WITH LOW FREEZING POINT
SUSPENSION OU DISPERSION RENFERMANT DES DERIVES PHENOLIQUES A BAS POINT DE CONGELATION

(30) Priorität: 21.12.1998 DE 19859136
(43) Veröffentlichungstag der Anmeldung: 10.10.2001
(73) Patentinhaber: Omya AG, 4665 Oftringen (CH)
(72) Erfinder: BURI, Matthias, CH-4852 Rothrist (CH); SCHWARZENTRUBER, Patrick, CH-4656 Starrkirch-Wil (CH)
(74) Vertreter: Reinhard - Skuhra - Weise & Partner
(86) Internationale Anmeldenummer: EP9909931
(87) Internationale Veröffentlichungsnummer: WO00036913

(56) Entgegenhaltungen:
- EP-A- 0 414 309
- EP-A- 0 553 628
- DE-A- 2 063 631
- DE-A- 2 732 441
- DE-A- 2 816 050
- GB-A- 872 900
- US-A- 3 824 190
- S.S.BLOCK: "Disinfection, Sterilization, and Preservation" 1991 , LEA & FEBIGER , PHILADELPHIA, US XP002136817 Chapter 12, D.O.Connor et al.: 'Phenolic Compounds', pages 204-224 Seite 220, Spalte 1, Absatz 4
- DATABASE WPI Section Ch, Week 199649 Derwent Publications Ltd., London, GB; Class A60, AN 1996-493400 XP002136818 & JP 08 253404 A (KATAKURA KAGAKU KOGYO KENKYUSHO KK), 1. Oktober 1996 (1996-10-01)

## Beschreibung

Die vorliegende Erfindung betrifft eine Suspension oder Dispersion von Mineralien, Füllstoffen und /oder Pigmenten, die eine wässerige Phenolderivatlösung mit tiefem Gefrierpunkt und mikrobizider Wirkung enthält.

Phenolderivat-Formulierungen haben Mängel, speziell beim Einsatz als Konservierungsmittel im technischen Bereich, wie in hochkonzentrierten Pigmentslurries, aber auch allgemein in Anwendungen im Bereich von pH 7 - 10.5. Phenol, alkyl- und arylsubstituierte Phenole, halogenierte Phenole sowie Kresole und halogenierte Kresole sowie deren Alkalisalze sind bekannt als Fungizide und Bakterizide im protektiven und kurativen Bereich. Die meisten Formulierungen dieser Phenolderivate sind schlecht wasserlöslich, schlecht mischbar mit Wasser oder als wasserlösliche Alkalisalz-Formulierungen zu alkalisch für die spätere Anwendung und beeinflussen dadurch das zu schützende Produkt negativ oder haben einen Gefrierpunkt von 0°C oder nur wenig unter 0°C. Speziell *o*-Phenylphenol und Natrium-*o*-Phenylphenolat sowie Kalium-*o*-Phenylphenolat sind bekannt als Fungizide für Holz, aber auch als Konservierungsmittel für Pigmentslurries. *o*-Phenylphenol, Natrium-*o*-Phenylphenolat und Kalium-*o*-Phenylphenolat sind in Pulverform erhältlich. *o*-Phenylphenol ist auch in aliphatischen Glykolen, wie z.B. in einer 60 Gew.-%igen Lösung in Monopropylenglykol, erhältlich. Natrium-*o*-Phenylphenolat ist als 25 Gew.-%ige Natronlaugenlösung und als 35 - 38 Gew.-%ige Emulsion, unter Verwendung hoher Mengen an Emulgatoren zu deren Stabilisierung, auf dem Markt. Kalium-*o*-Phenylphenolat ist als eine 35 - 39 Gew.-%ige Kalilaugenlösung in Wasser auf dem Markt.

*o*-Phenylphenol in Pulverform ist in grösseren Mengen nicht leicht zu handhaben. Zudem ist *o*-Phenylphenol fast unlöslich in Wasser und kann dadurch in eine wässrige, hochkonzentrierte Pigmentslurry nur schlecht eingerührt werden. Die Verteilung ist ungenügend. Natrium-*o*-Phenylphenolat in Pulverform weist wie die entsprechenden alkalischen Lösungen einen zu hohen pH-Wert für viele spätere Anwendungen auf. Ebenfalls ist die Pulverform in grösseren Mengen nicht leicht zu handhaben. Flüssige Formulierungen werden klar vorgezogen.

*o*-Phenylphenol in Monopropylenglykol ist wegen der schlechten Löslichkeit von *o*-Phenyl-phenol nicht mit Wasser mischbar und kann deshalb in dieser Formulierung nicht als Konservierungsmittel für Pigmentslurries eingesetzt werden. Die Lösung fällt beim Einbringen in wässrige Systeme schmierig, klebrig und flockig aus. 25 Gew.-% wässriges Natrium-*o*-Phenylphenolat sowie 35 Gew.-% Kalium-*o*-Phenylphenolat sind sehr ätzend und haben einen pH-Wert von über 12. Dieser hohe pH-Wert und die hohe Ionenkonzentration führen bei der Zugabe zu einem wässrigen Pigmentslurry mit hohem Feststoffgehalt, speziell bei einer Konzentration von > 50 Volumen-% an Feststoff, zur Agglomeratbildung in der Pigmentslurry und zu einer Veränderung des pH-Werts im Endprodukt.

Die Verwendung von emulgiertem Natrium-o-Phenylphenolat in Pigmentslurries mit hohem Feststoffgehalt ist riskant, da der Emulgator die Pigmentdispergierung destabilisiert und zu Schaumbildung neigt. Weiterhin liegt der Gefrierpunkt der meisten wässrigen Salzlösungen und wässrigen Emulsionen von *o*-Phenylphenol bei, oder nicht viel unterhalb 0°C. Nur *o*-Phenylphenol in Propylenglykol und Kalium-*o*-Phenylphenolat haben einen Gefrierpunkt von < - 15°C. Diese weisen jedoch die schlechte Mischbarkeit resp. das Risiko der Agglomeratbildung auf. Während des Winters in Nordeuropa, z.B. in Norwegen, und in Nordamerika und Kanada ist es unmöglich, wässrige Flüssigkeiten zu transportieren ohne zu riskieren, dass diese gefrieren, wenn keine Heizung am Transportbehälter installiert ist. Das gleiche Problem besteht bei der Lagerung.

S.S.BLOCK: 'Disinfection, Sterilization, and Preservation' 1991, LEA & FEBIGER, PHILADELPHIA, US XP002136817, beschreibt auf Seite 220 das Prinzip der Teilneutralisation bestimmter Phenolderivate mit hoher Acidität. Durch die Teilneutralisation alkalischer Phenoderivate wird gemäß dieser Schrift bei einigen Phenolderivaten eine mikrobizide Aktivität bei akzeptabler Löslichkeit der Phenolderivate erreicht.

US-S-3 824 190 beschreibt die Verwendung von Lösungsmitteln wie Alkoholen oder Glykolen zur Verbesserung der Gefriertaustabilität. Bei den in dieser Schrift genannten Zusammensetzungen ist immer ein anionisches synthetisches Detergenz enthalten.

JP 08 253404 A betrifft eine antimikrobielle Zusammensetzung, die neben einer Isothiazolinonverbindung o-Phenylphenol und Ethylenglykol, jedoch kein Wasser, enthält.

DE 28 16 050 A1 beschreibt gepufferte Phenol-Glutaraldehyd-Lösungen als keimtötende Zusammensetzungen. Glutaraldehyd ist in einer Konzentration von 0,75 bis 4 Gew.-% enthalten.

DE-A-27 32 441 betrifft eine Zusammensetzung, die bezogen auf 100 kg die Bestandteile enthält: 40-60 kg sulfuriertes Rizinusöl, 5-15 kg Glyzerin, 20-30 kg Parachlormetacresol (Raschit), 0,4-0,7 kg Chlorothymol, 6-12 kg KOH oder NaOH, etwa 50%-ig und 1-2 kg Fichtennadelöl.

Die DE-OS 20 63 631 betrifft o-Phenylphenol enthaltende Desinfektionsmittel. Zur Herstellung wäßriger Dispersionen von o-Phenylphenol werden anionaktive Dispergiermittel, wie z.B. aliphatische langkettige Schwefelsäuremonoester oder aliphatisch-aromatische Sulfonsäuren oder langkettige Alkoxyessigsäuren eingesetzt.

EP 414 309 A1 betrifft eine wäßrige antimikrobielle Zusammensetzung, die Ethylalkohol und Benzylalkohol enthät sowie deren Verwendung zur Flächendesinfektion.

Es ist eine Aufgabe der Erfindung eine flüssige Formulierung von Phenol und/oder Phenolderivaten, speziell von *o*-Phenylphenol, bereitzustellen, die einen pH-Wert aufweist, welcher an die Endanwendung angepaßt werden kann. Weiterhin soll die Formulierung einen Gefrierpunkt von mindestens -7°C haben. Weiterhin sollte die Konzentration der Phenol- und/oder Phenolderivat-Lösung, vorzugsweise *o*-Phenylphenol-Lösung, wegen der Transport- und Lagerkosten so hoch wie möglich sein, um das Transport- und Lagervolumen zu reduzieren.

Diese Aufgabe wurde erfindungsgemäß durch eine wässrige Suspension oder Dispersion vom Mineralien, Füllstoffen und/oder Pigmenten, mit einem mikrobiziden Mittel in Form einer Lösung, enthaltend Derivate des Phenols in teilneutralisierter Form sowie ein oder mehrere Glykolverbindungen und/oder Glycerin, wobei das mikrobizide Mittel in Form einer Lösung über 25 Gew.-% des Phenolderivats enthält, gelöst.

Die in der erfindungsgemäßen Suspension oder Dispersion enthaltenen mikrobiziden Mittel in Form eine Lösung weisen einen Gefrierpunkt von mindestens -7°C auf. Bevorzugte Ausgestaltungen der mikrobiziden Mittel weisen Gefrierpunkte von -10°C oder sogar -15°C auf.

Ein besonders großer Vorteil der erfindungsgemäßen mikrobiziden Mittel liegt darin, daß ihr pH-Wert auf den in der späteren Anwendung benötigten Wert einstellbar ist. Beispiele hierfür sind pH-Werte von 8,5-9,5 für Calciumcarbonataufschlämmungen und 9,5-10,5 für Talksaufschlämmungen sowie 7,0-7,5 für amerikanische Kaolinaufschlämmungen. Dies wird dadurch erreicht, daß das erfindungsgemäß eingesetzte Derivat des Phenols, vorzugsweise o-Phenylphenol, teilneutralisiert vorliegt, bevorzugt mit Alkalihydroxiden teilneutralisiert. Insbesondere bevorzugt werden zur Teilneutralisation NaOH oder KOH eingesetzt.

Als Lösungsvermittler zwischen dem Phenolderivat und dem Wasser werden Glykolverbindungen, bevorzugt aliphatische Glykolverbindungen und/oder Glycerin eingesetzt. Diese Stoffe bewirken gleichzeitig eine Absenkung des Gefrierpunkts der Formulierung (Lösung). Bevorzugt werden unter den Glykolen 2-oder 3-wertige Glykole eingesetzt. Beispielsweise Glykole auf Basis von Ethylenglykol, Diethylenglykol oder Monopropylenglykol oder deren Mischungen.

Das erfindungsgemäß eingesetzte Derivat des Phenols entfaltet eine mikrobizide Wirkung und wirkt somit als Konservierungsmittel. Das erfindungsgemäße mikrobizide Mittel kann aufgrund dieser Eigenschaften sowohl für den protektiven als auch für den kurativen Einsatz dienen.

Bevorzugte Phenolderivate sind einfach oder mehrfach substituierte Phenole mit aliphatischen und/oder aromatischen Substituenten. Beispiele für derartige Derivate, die erfindungsgemäß einsetzbar sind, sind o-Phenylphenol (OPP), halogenierte Phenole, Kresole, halogenierte Kresole, Resorcine und Parahydroxybenzoesäureester (PHB-Ester) oder deren Mischungen. Beispiele für die Kresole sind halogenierte Kresole, insbesondere chlorierte Kresole, o-, m- und p-Kresol, Isopropyl-o-kresol, 4-Isopropyl-m-kresol. Ein Beispiel für ein verwendbares Resorcin ist 4-n-Hexylresorcin.

Entscheidend für den Erfolg der vorliegenden Erfindung ist die Teilneutralisation des Phenolderivats. Der Teilneutralisationsgrad des Phenolderivats liegt im Bereich von 5-95 Mol-%, bevorzugt 5-80 Mol-%. Die bevorzugten Bereiche hängen insbesondere vom pH-Bereich ab, in denen die erfindungsgemäßen mikrobiziden Mittel eingesetzt werden. Beispielsweise beträgt beim Einsatz im pH-Bereich von 6-8 der bevorzugte Teilneutralisierunsgrad 5-60 Mol-%, insbesondere bevorzugt 5-30 Mol-%. Für den späteren Einsatz im pH-Bereich von 7-9 beträgt der Teilneutralisationsgrad bevorzugt 20-50 Mol-%, beispielsweise 20-30 Mol-%. Für den späteren Einsatz im pH-Bereich von 8-10 beträgt der Teilneutralisationsgrad bevorzugt 30-70 Mol-%, beispielsweise 30-50 Mol-%, und für den späteren Einsatz im pH-Bereich von 9-11 liegt der bevorzugte Teilneutralisationsgrad bei 50-80 Mol-%, beispielsweise 50-70 Mol-%.

Das Phenolderivat liegt in dem mikrobiziden Mittel in einer Menge von 25-50 Gew.-%, besser 25-40 Gew.-% vor und als organische Lösungsmittel können aliphatische Glykolverbindungen und/oder Glycerin in einer Menge von 20-90 Gew.-%, bevorzugt 40-80 Gew.-% und wahlweise zusätzlich aromatische Alkohole in einer Menge von 0-70 Gew.-%, besser 0-50 Gew.-% in der Formulierung vorliegen, wobei der Gesamtanteil an organischen Lösungsmitteln 40-90 Gew.-% beträgt und die Differenz zu jeweils 100 Gew.-% Alkalihydroxid und Wasser ist.

In einer bevorzugten Ausführungsform der Erfindung enthält das mikrobizide Mittel einen oder mehrere aromatische Alkohole. Als aromatische Alkohole werden bevorzugt Verbindungen der nachfolgenden Formel eingesetzt: 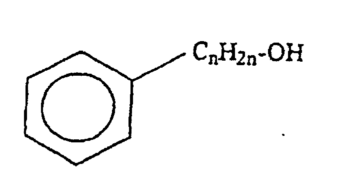 wobei wahlweise in o-, m- und/oder p-Stellung ein weiterer Substituent R vorliegt, wobei R bevorzugt ein geradkettiger oder verzweigter aliphatischer Substituent mit der Forml -CₙH₂ₙ₊₁ ist, wobei n = 1-5, bevorzugt 1-3, weiterhin bevorzugt 1.

### Beispiele für bevorzugt einsetzbare Alkohole sind:

Benzylalkohol und/oder 2-Phenylethan-1-ol und/oder 3-Phenylpropan-1-ol und/oder 1-Phenylpropan-2-ol oder 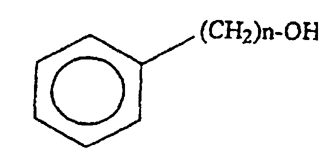 wobei n = 1-5, bevorzugter 1-3 und weiterhin bevorzugt 1.

In weiteren Ausführungsformen der Erfindung sind in dem mikrobiziden Mittel weitere mikrobizid wirkende Stoffe enthalten, beispielsweise bakterizid und/oder fungizid wirkende verbindungen. Die Herstellung des erfindungsgemäßen mikrobiziden Mittels kann vom Fachmann aufgrund seiner fachlichen Kenntnisse ohne erfinderische Schritte vorgenommen werden.

Beispielsweise werden bei der Herstellung des mikrobiziden Mittels der vorliegenden Erfindung das Phenolderivat in der Glykolverbindung und/oder dem Glycerin gelöst, bevorzugt unter leichtem Erwärmen. Die Reihenfolge ist jedoch auch umkehrbar, d.h. zunächst wird die Phenylverbindung vorgelegt und die Glykolverbindung bzw. das Glycerin wird anschließend zugegeben. Nach Herstellung der Phenolderivatlösung erfolgt eine Teilneutralisation, bevorzugt mit einem Alkalihydroxid, das in Wasser gelöst zugegeben wird. Als weiteres organisches Lösungsmittel können aromatische Alkohole in die Formulierung aufgenommen werden. Auch die Zugabe weiterer biozider Mittel ist möglich.

Grundsätzlich ist die Reihenfolge der Zugabe, wie bereits oben angedeutet, gleich. Es kann jedoch zu einer vorübergehenden Unverträglichkeit kommen, die zu einer vorübergehenden Ausfällung von Stoffen führt. Bevorzugt werden deshalb die Phenolverbindungen in dem organischen Lösungsmittel gelöst, worauf sich die Zugabe des Mittels zur Teilneutralisation in der entsprechenden Menge Wasser anschließt.

Überraschend und unerwartet stellte sich heraus, dass mit Alkalihydroxide teilneutralisierte Phenolderivate wie *o*-Phenylphenol, Kresole, vorzugsweise in Glykol/Wasser, selbst bei hohem Feststoffgehalt und sehr niedriger Temperatur von z.B. - 18°C nicht vom Glykol abgeschieden wurde und sich nicht zwei Phasen bildeten, die Lösungen über Monate stabil blieben, eine Braunfärbung, wie sie zum Beispiel von Alkalisalzen des o-Phenylphenols bestens bekannt ist, viel geringer war und der Gefrierpunkt und pH-wert nach Bedarf angepasst werden konnten.

Das erfindungsgemäße mikrobizide Mittel wird, wie auch aus den anliegenden Beispielen ersichtlich ist, zur Konservierung wässriger Suspensionen oder Dispersionen von Mineralien, Füllstoffen, Pigmenten und deren Mischungen eingesetzt. Die erfindungsgemäße das mikrobizide Mittel enthaltende wässrige Suspensionen oder Dispersionen von Mineralien, Füllstoffen und/oder Pigmenten wird bevorzugt in den Bereichen Papierherstellung, Papierbeschichtung und wässrige Lacke und Farben eingesetzt. Sie ist sowohl für den protektiven als auch für den kurativen Einsatz geeignet.

Die wässrige Suspension oder Dispersion kann weiterhin ein oder mehrere synthetische und/oder natürliche organische Bindemittel, bevorzugt Styrolbutadienlatices und/oder Styrolacrylatlatices, Stärke und/oder Carboxymethylcellulose, enthalten, die vor mikrobiellem Befall und/oder Verderb geschützt werden.

Die wässrige Suspension oder Dispersion enthält bevorzugt als Mineralien und/oder Füllstoffe und/oder Pigmente Elemente der zweiten und/oder dritten Hauptgruppe und/oder der vierten Hauptgruppe und/oder der vierten Nebengruppe des Periodensystems der Elemente, insbesondere Calcium und/oder Silicium und/oder Aluminium und/oder Titan und/oder Barium enthaltende Verbindungen und/oder organische Pigmente.

Die wässrige Suspension oder Dispersion enthält bevorzugt Kaolin und/oder Aluminiumhydroxid und/oder Titandioxid und/oder Bariumsulfat und/oder Polystyrolhohlkugeln und/oder Formaldehydharze und/oder Cacliumcarbonat enthaltende Mineralien und/oder Füllstoffe und/oder Pigmente, insbesondere natürliche Calciumcarbonate und/oder präzipitierte Calciumcarbonate und/oder Marmor und/oder Kalk und/oder Dolomit und/oder Dolomit enthaltende Calciumcarbonate.

Nachfolgend wird die Erfindung anhand von Ausführungsbeispielen, auch im Vergleich mit dem Stand der Technik, weiter erläutert. Die Erfindung ist jedoch nicht auf diese beispielhaften Ausgestaltungen beschränkt.

### Allgemeine Bemerkungen zu den Beispielen

### 1.) Keimzählungen

Die Keimzahl wurde nach der Methode "Bestimmung von aeroben mesophilen Keimen", Schweizerisches Lebensmittelbuch, Kapitel 56, Abschnitt 7.01, Ausgabe 1985, Revision 1988, bestimmt. Die gefundenen Bakterienstämme stammen mehrheitlich aus der Familie der Pseudomonaden (vorwiegend Pseudomonas aeruginosa).

### 2.) VISKOSITÄTSMESSUNG DER MINERAL- UND/ODER FÜLLSTOFF UND/ODER PIGMENT-SUSPENSION:

Die Viskositätsmessung erfolgte auf einen Brookfield Viskosimeter Typ PVF-100 bei 100 U/Min. Für die einzelnen Messungen wurden die folgenden Spindeln verwendet:

| | | |
|---|---|---|
| Spindel | RV 2 | 40 - 320 mPas |
| | RV 3 | 320 - 800 mPas |
| | RV 4 | 800 - 1600 mPas |
| | RV 5 | 1600 - 3200 mPas |
| | RV 6 | 3200 - 8000 mPas |

Die Messung erfolgte in einem 400 ml-Becherglas von niedriger Form.

Die Temperatur während der Messung betrug 20°C. Die Messung erfolgte nach 1 Min. Rührzeit.

Vor den eigentlichen Messungen wurden alle Proben 2 Min. intensiv gerührt (5000 U/Min., Rührscheibendurchmesser 50 mm).

Diese Art der Viskositätsmessung wurde für alle folgenden Beispiele verwendet.

### 3.) FEINHEIT DER MINERAL- UND/ODER FULLSTOFF- UND/ODER PIGMENT-SUSPENSION:

Die Feinheitsmerkmale der erfindungsgemäß hergestellten Suspensionen wurden durch Sedimentationsanalyse im Schwerefeld mit dem SEDIGRAPH 5100 der Firma Micromeritics, U.S.A., bestimmt.

Die Messung der kationisch stabilisierten Suspensionen erfolgte in destilliertem Wasser. Die Dispergierung der Proben wurde mittels Schnellrührer und Ultraschall vorgenommen.

Die Messung der Pulver erfolgte in 0,1% Na₄P₂O₇-Lösung.

Die gemessene Teilchenverteilung wurde auf einem X-Y-Schreiber als Durchgangs-Summenkurve dargestellt (siehe z.B. Belger, P., Schweizerische Vereinigung der Lack- und Farben-Chemiker, XVII. FATIPEC-Kongreß, Lugano, 23. bis 28. September 1984), wobei auf der X-Achse der Teilchendurchmesser eines entsprechenden sphärischen Durchmessers und auf der Y-Achse der Anteil an Teilchen in Gew.-% aufgetragen wurde.

### Beispiele zum Stand der Technik

### Beispiel 1, Stand der Technik

Eine 20 Gew.-%ige Lösung von *o*-Phenylphenol wurde hergestellt durch Lösen des *o*-Phenylphenol in destilliertem Wasser mit 1.05 Mol NaOH / Mol *o*-Phenylphenol.

### Resultat :

### Gefrierpunkt: - 3°C

Der pH-Wert der 20 Gew.-%igen Lösung von o-Phenylphenol betrug 12.2 (gemessen bei 20°C). Die mit Wasser auf 1 % aktiv verdünnten Lösung hatte einen pH-Wert von 11.8.
Bei einer Reduktion des pH-Wertes auf unter 10.5 durch langsame Zugabe von verdünnter Säure (z.B. HCl) unter Rühren trat Ausfällung ein, resp. es kann keine teilneutralisierte o-Phenylphenol-Lösung hergestellt werden. Das Produkt fällt aus.

Der pH kann nicht auf den für die Endanwendung nötigen Wert angepasst werden. Der Gefrierpunkt ist nicht akzeptabel.
Beim Einsatz von NaOH als Neutralisationsmittel konnten bei Raumtemperatur keine *o*-Phenylphenol-Lösungen mit deutlich höherer Konzentration als 20 Gew.-% hergestellt werden, oder sie kristallisierten bereits bei der Lagerung bei Raumtemperatur wieder aus.

### Beispiel 2, Stand der Technik

Eine 28 Gew.-%ige Lösung von *o*-Phenylphenol wurde hergestellt durch Lösen von *o*-Phenylphenol in destilliertem Wasser mit 1.1 Mol KOH / Mol *o*-Phenylphenol.

### Resultate:

### Gefrierpunkt: - 16°C, Beginn der Kristallisation bei - 13°C

Der pH-Wert der 28 Gew.-%igen Lösung von *o*-Phenylphenol betrug 12.6 (gemessen bei 20°C). Die mit Wasser auf 1 % aktiv verdünnten Lösung hatte einen pH-Wert von 12.1.
Der Gefrierpunkt liegt im richtigen Bereich, das Produkt ist jedoch wegen des hohen pH-Wertes nicht einsetzbar.
Bei einer Reduktion des pH-Wertes auf unter 10.5 durch langsame Zugabe von verdünnter Säure (z.B. HCl) unter gutem Rühren trat Ausfällung ein.
Der pH kann nicht auf den für die Endanwendung nötigen Wert angepasst werden, resp. es kann keine teilneutralisierte o-Phenylphenol-Lösung ohne Ausfällung hergestellt werden.

### Beispiel 3, Stand der Technik

Eine wässrige Aufschlämmung von Kaolin aus Georgia, USA, mit einem Feststoffgehalt von 72.8 Gew.-% und einer Korngrössenverteilung, so dass 94 Gew.-% der Partikel einen Durchmesser von weniger als 2 mm hatten (gemessen mit Sedigraph 5100, Micromeritics, USA), dispergiert mit 0.35 Gew.-% Natriumpolyacrylat und mit einem pH-Wert von 7.4 wurde mit 300 g aktiv *o*-Phenylphenol / t Slurry konserviert. Zugabe des *o*-Phenylphenol gemäss Beispiel 1.
(300 g aktiv *o*-Phenylphenol / t Slurry = ca. 1500 g 20 %ige Lösung / t Slurry)
Eine Blindprobe der Kaolinslurry wurde auf die gleiche Art hergestellt, jedoch ohne Konservierungsmittel.

### Resultate:

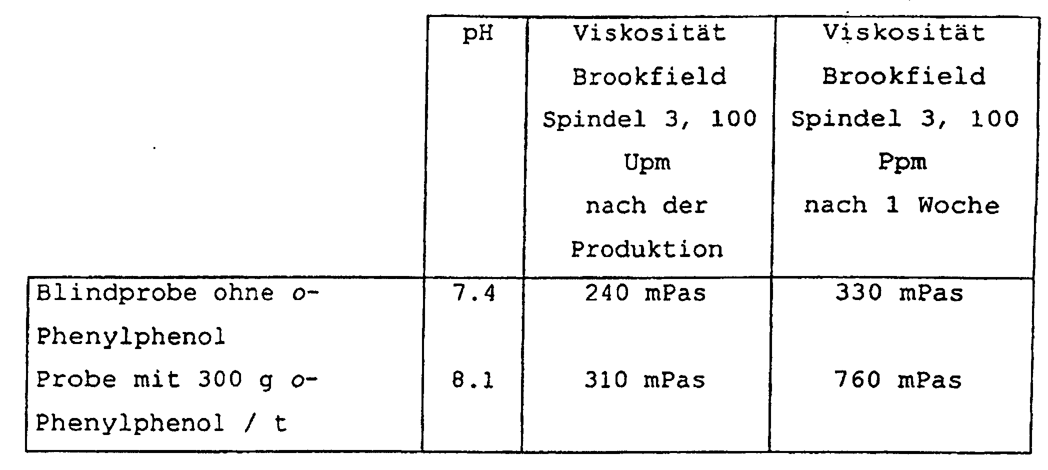

In der Blindprobe ohne *o*-Phenylphenol wurde nach 24 Std. eine Keimzahl von 10⁵/g gemessen.
In der Probe mit 300 g *o*-Phenylphenol / t wurde nach 24 St. eine Keimzahl von < 100/g gemessen.

Die Viskosität des Kaolinslurry mit hohem Feststoffgehalt, dispergiert mit Natriumpolyacrylat, erhöhte sich bei Zugabe von o-Phenylphenol-Lösung aus Beispiel 1 sofort und über eine Lagerzeit von 1 Woche. Der pH Wert des Slurry veränderte sich bei Zugabe von *o*-Phenylphenol-Lösung aus Beispiel 1.
In diesem Fall besteht die Gefahr, dass der Slurry nach einem mehrwöchigen Transport in gros-sen Mengen per Schiff, Bahn oder Camion nicht entladen werden kann. Der pH der Endanwendung, z.B. Streichfarbe oder Papierproduktion, wird beeinflusst.

300 ppm aktiv *o*-Phenylphenol aus Beispiel 1 sind notwendig, um den Slurry keimfrei zu halten. Es ist nicht möglich, den Slurry zu konservieren, ohne die anderen Eigenschaften des Slurry negativ zu beeinflussen.

### Beispiel 4, Stand der Technik

Eine wässrige Aufschlämmung von Calciumcarbonat aus natürlichem Marmor aus Norwegen mit einem Feststoffgehalt von 77.8 Gew.-% und einer Korngrössenverteilung, so dass 90 Gew.-% der Teilchen einen Durchmesser von weniger als 2 mm hatten (gemessen mit Sedi-graph 5100, Micromeritics, USA), wurde mit 250 g aktiv *o*-Phenylphenol / t Slurry konserviert. Zugabe des *o*-Phenylphenol gemäss Beispiel 2.
(250 g aktiv *o*-Phenylphenol / t Slurry = ca. 890 g 28 %ige Lösung / t Slurry)
Eine Blindprobe von Calciumcarbonatslurry wurde auf die gleiche Weise hergestellt, jedoch ohne Konservierungsmittel.

### Resultate:

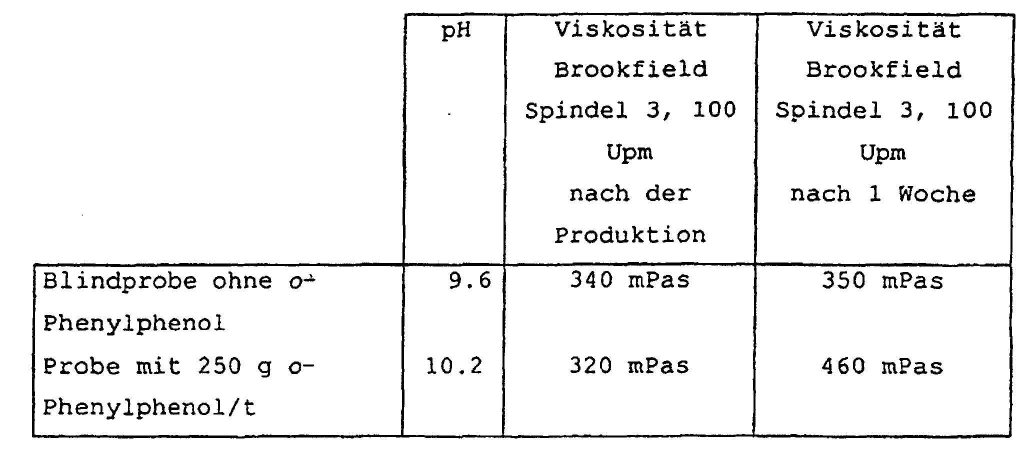

Der Siebrückstand der Blindprobe ohne *o*-Phenylphenol als Kalium-*o*-Phenylphenolat-Lösung betrug 25 ppm auf einem Sieb mit 45 µm Maschenweite.
Der Siebrückstand der Probe mit 250 ppm *o*-Phenylphenol als Kalium-*o*-Phenylphenolat-Lösung betrug 160 ppm auf einem Sieb mit 45 µm Maschenweite.
In der Blindprobe ohne *o*-Phenylphenol wurde nach 24 Std. eine Keimzahl von 10⁵/g gemessen.
In der Probe mit 250 g *o*-Phenylphenol / t wurde nach 24 Std. eine Keimzahl von < 100/g gemessen.

Die Viskosität des Calciumcarbonatslurry mit hohem Feststoffgehalt, dispergiert mit Natriumpolyacrylat, erhöhte sich nicht sehr viel über eine Lagerzeit von 1 Woche. Es war jedoch ersichtlich, dass der Siebrückstand auf dem 45 mm-Sieb unannehmbar anstieg. Der pH-Wert des Slurry veränderte sich negativ in den stärker alkalischen Bereich.
Ein solches Produkt führt zu Kratzern in der Papierbeschichtung und Stauben während dem Drucken.

Um den Slurry vor Verderb durch Mikroorganismen zu schützen sind 250 ppm aktiv *o*-Phenyl-phenol aus Beispiel 2 notwendig.
Es ist nicht möglich, den Slurry zu konservieren, ohne andere Eigenschaften des Slurry negativ zu beeinflussen.

### Erfindungsgemässe Beispiele

### Beispiel 5

Eine *o*-Phenylphenol-Lösung wurde hergestellt durch Lösen von 42.5 g *o*-Phenylphenol unter Verwendung von 26.4 g Monopropylenglykol, 5.5 g NaOH und 25.6 g Wasser, so dass eine 42.5 Gew.-%ige Lösung bezogen auf *o*-Phenylphenol erreicht wurde.
Der Neutralisationsgrad der Phenolgruppe von *o*-Phenylphenol mit NaOH betrug 55 Mol %.

### Resultate:

### Gefrierpunkt: unterhalb - 18°C.

Bei - 18°C war die Lösung immer noch flüssig, viskos und klar. Es konnte keine Kristallisation beobachtet werden.

### Beispiel 6

Eine *o*-Phenylphenol-Lösung wurde hergestellt durch Lösen von 47.5 g *o*-Phenylphenol unter Verwendung von 29.4 g Monopropylenglykol, 3.5 g KOH und 19.6 g Wasser, so dass eine 47.5 Gew.-%ige Lösung bezogen auf *o*-Phenylphenol erreicht wurde.
Der Neutralisationsgrad der Phenolgruppe von *o*-Phenylphenol mit KOH betrug 22.4 Mol %.

### Resultate:

### Gefrierpunkt: unterhalb - 18°C.

Bei - 18°C war die Lösung immer noch flüssig, viskos und klar. Es konnte keine Kristallisation beobachtet werden.

### Beispiel 7

Eine *o*-Phenylphenol-Lösung wurde hergestellt durch Lösen von 50.0 g *o*-Phenylphenol unter Verwendung von 27 g Monopropylenglykol, 1.0 g NaOH und 22.0 g Wasser, so dass eine 50 Gew.-%ige Lösung bezogen auf *o*-Phenylphenol erreicht wurde. Der Neutralisationsgrad der Phenolgruppe von *o*-Phenylphenol mit NaOH betrug 8.5 Mol %.

### Resultate:

### Gefrierpunkt: unterhalb - 18°C.

Bei - 18°C war die Lösung immer noch flüssig, viskos und klar. Es konnte keine Kristallisation beobachtet werden.

### Beispiel 8

Eine *o*-Phenylphenol-Lösung wurde hergestellt durch Lösen von 250 g *o*-Phenylphenol in 500 g Monopropylenglykol unter leichtem Erwärmen. Anschließend wurden 30 g NaOH, gelöst in 220 g Wasser, zugegeben, so dass 1 kg einer ca. 25 Gew.-%igen Lösung, bezogen auf *o*-Phenylphenol, erreicht wurde.
Der Neutralisationsgrad der Phenolgruppe von *o*-Phenylphenol mit NaOH betrug 51,1 Mol %.

### Resultate:

### Gefrierpunkt: unterhalb - 18°C

Bei - 15°C war die Lösung immer noch flüssig und klar. Es konnte keine Kristallisation beobachtet werden.
Bei - 10°C betrug die Viskosität nur 460 mPas. Durch die tiefe Viskosität bei - 10°C ist das Produkt auch unterhalb des Gefrierpunkts leicht pumpbar.

### Beispiel 9

Eine o-Phenylphenol-Lösung wurde hergestellt durch Lösen von 30 g o-Phenylphenol unter Verwendung von 45 g Ethylenglykol, 6 g NaOH und 19 g Wasser, so dass 100 g einer ca. 30 Gew.-%igen Lösung bezogen auf o-Phenylphenol erreicht wurde.
Der Neutralisationsgrad der Phenolgruppe von o-Phenylphenol mit NaOH betrug 85 Mol %.

### Resultate:

### Gefrierpunkt: unterhalb - 18°C

Bei - 15°C war die Lösung immer noch flüssig, viskos und klar. Es konnte keine Kristallisation beobachtet werden.
Bei - 10°C betrug die Viskosität nur 840 mPas. Durch die tiefe Viskosität bei - 10°C ist das Produkt auch unterhalb des Gefrierpunkts pumpbar.

### Beispiel 10

Eine wässrige Aufschlämmung von Kaolin aus Georgia, USA, mit einem Feststoffgehalt von 72.8 Gew.-% und einer Korngrössenverteilung, so dass 94 Gew.-% der Teilchen einen Durchmesser von weniger als 2 mm hatten (gemessen mit Sedigraph 5100, Micromeritics, USA), dispergiert mit 0.35 Gew.-% Natriumpolyacrylat, und mit einem pH-Wert von 7.4 wurde mit 300 g aktiv *o*-Phenylphenol / t Slurry konserviert. Zugabe des *o*-Phenylphenol gemäss Beispiel 7.
(300 ppm aktiv *o*-Phenylphenol = 600 g 50 %ige Lösung / t Slurry)
268,5 g Wasser in 2 Liter Becherglas
3,5 g Natriumpolyacrylat zugeben
728 g Kaolin einrühren
15 min Dispergieren bei 2500 U/min Rührscheiben ⌀ 50 mm
0,600 g der 50%igen Lösung unter Rühren zugeben;

alle Beispiele, die die Herstellung von Pigmentaufschlämmung betreffen, wurden auf diese Weise hergestellt.

### Resultate:

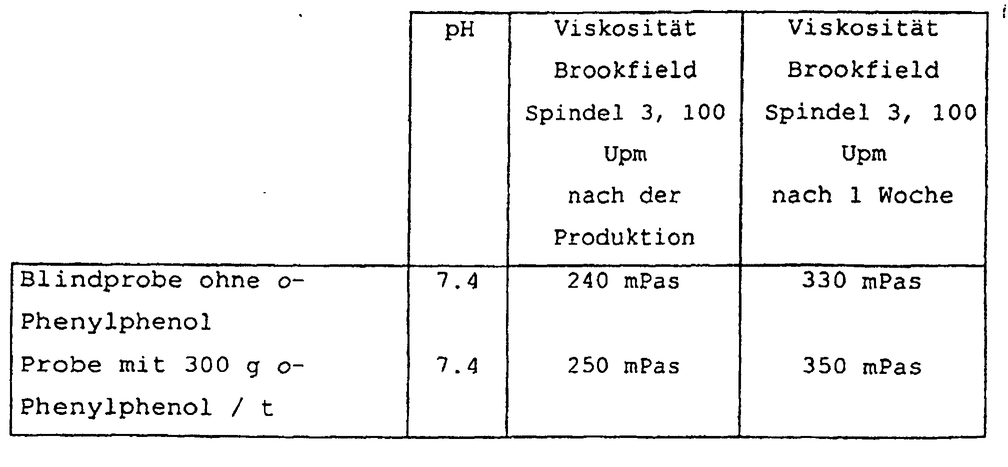

In der Blindprobe wurde nach 24 Std. eine Keimzahl von 10⁵/g gemessen.
In der Probe mit 300 g *o*-Phenylphenol / t wurde nach 24 Std. eine Keimzahl von < 100 / g ge-messen.

Die Viskosität des Kaolinslurry mit hohem Feststoffgehalt, dispergiert mit Natriumpolyacrylat, blieb über eine Lagerzeit von einer Woche stabil. Der pH-Wert der Slurries blieb bemerkenswert konstant.
Unter diesen Umständen besteht aus dieser Sicht kein Risiko, dass der Slurry nach wochenlangem Transport in grossen Mengen per Schiff, Bahn oder Camion nicht entladen werden kann.
Die anderen Eigenschaften des Slurry wird nicht negativ beeinflusst durch die erfindungsgemässe Lösung von Beispiel 7 verglichen mit Beispiel 3 des Stand der Technik.

### Beispiel 11

Eine wässrige Aufschlämmung von Calciumcarbonat aus natürlichem gemahlenem Marmor aus Norwegen mit einem Feststoffgehalt von 77.8 Gew.-% und einer Korngrössenverteilung, so dass 90 Gew.-% der Teilchen einen Durchmesser von weniger als 2 mm hatten (gemessen mit Sedigraph 5100, Micromeritics, USA) wurde mit 250g aktiv o-Phenylphenol / t Slurry konserviert. Zugabe des o-Phenylphenol gemäss Beispiel 8.
(250 g aktiv *o*-Phenylphenol / t Slurry = ca. 525 g 47.5 %ige Lösung / t Slurry).
Eine Blindprobe wurde auf die gleiche Weise hergestellt, jedoch ohne Konservierungsmittel.

### Resultate:

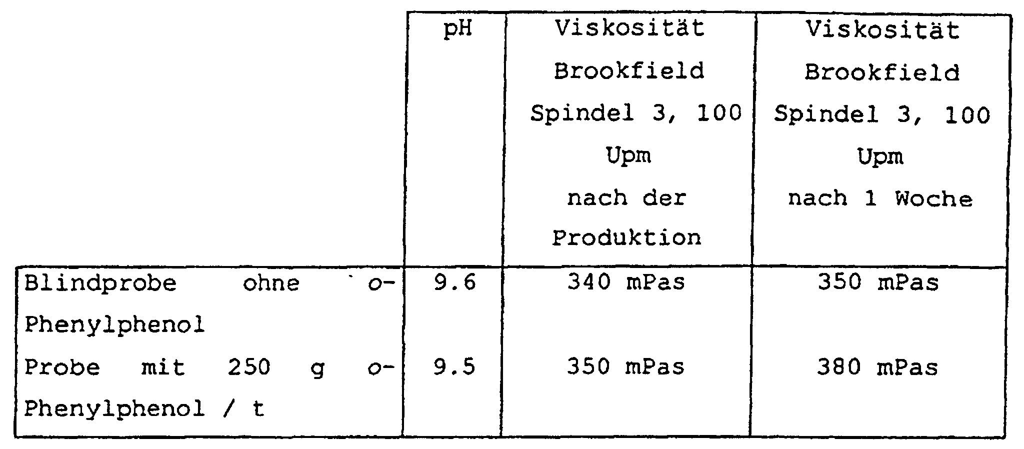

Der Siebrückstand der Blindprobe ohne das neue Biozid betrug 28 ppm auf einem Sieb mit 45 µm Maschenweite.
Der Siebrückstand der Probe mit dem neuen Biozid betrug 31 ppm auf einem Sieb mit 45 µm Maschenweite.

In der Blindprobe wurde nach 24 Std. eine Keimzahl von 10⁶ / g gemessen.

In der Probe mit 250 g *o*-Phenylphenol / t wurde nach 24 Std. eine Keimzahl von < 100 / g gemessen.

Die Viskosität des Calciumcarbonatslurry mit hohem Feststoffgehalt, dispergiert mit Natriumpolyacrylat, blieb über eine Lagerzeit von einer Woche stabil. Der pH-Wert der Slurries blieb bemerkenswert konstant.
Der Siebrückstand wurde vom Biozid nicht negativ beeinflusst, d.h. es fand keine Aggregatbildung statt.
Die anderen Eigenschaften des Slurry wurde nicht negativ beeinflusst durch die erfindungsgemässe Lösung von Beispiel 8 verglichen mit Beispiel 1 des Stand der Technik.

### Beispiel 12

Eine wässrige Aufschlämmung von Talk aus Finnland mit einem Feststoffgehalt von 64.2 Gew.-% und einer Korngrössenverteilung, so dass 54 Gew.-% der Teilchen einen Durchmesser von weniger als 2 mm hatten (gemessen mit Sedigraph 5100, Micromeritics, USA), dispergiert mit 0.25 Gew.-% Natriumpolyacrylat und mit 1.4 Gew.-% eines handelsüblichen Ethylenoxyd/Propylenoxydadukts als Netzmittel und 0.08 % NaOH, und mit einem pH-Wert von 10.1 wurde mit 350 g aktiv o-Phenylphenol / t Slurry konserviert. Zugabe des o-Phenylphenol gemäss Beispiel 9 als eine 30 %ige Lösung. (350 ppm aktiv o-Phenylphenol = 1166.6 g 30 %ige Lösung / t Slurry)

### Resultate :

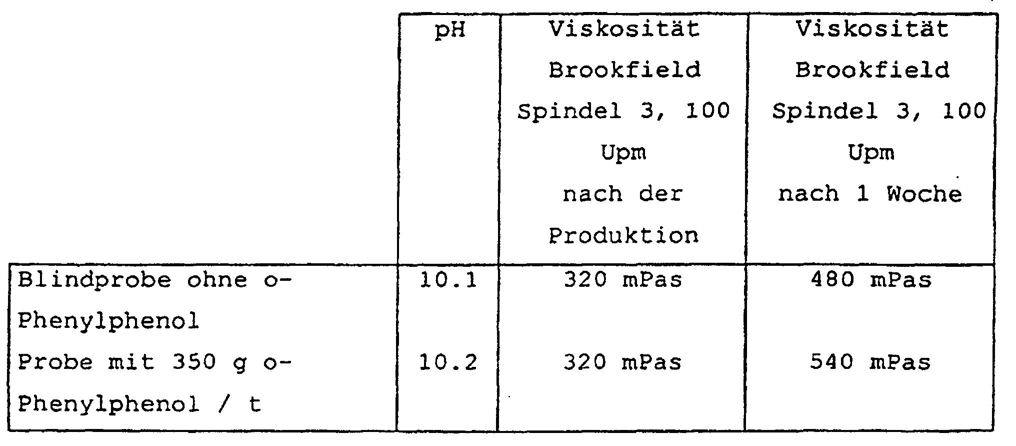

In der Blindprobe wurde nach 24 Std. eine Keimzahl von 10⁵/g gemessen.
In der Probe mit 350 g o-Phenylphenol / t wurde nach 24 Std. eine Keimzahl von < 100 / g gemessen.

Die Viskosität des Talkslurry mit hohem Feststoffgehalt, dispergiert mit Natriumpolyacrylat, blieb über eine Lagerzeit von einer Woche nahezu identisch. Der pH-Wert des Slurry blieb bemerkenswert konstant.
Unter diesen Umständen besteht aus dieser Sicht kein Risiko, dass der Slurry nach wochenlangem Transport in grossen Mengen per Schiff, Bahn oder Camion nicht entladen werden kann.
Die anderen Eigenschaften des Slurry wird nicht negativ beeinflusst durch das erfindungsgemässe Konservierungsmittel

### Beispiel 13

Eine wässrige Emulsion von Öl in Wasser, wie sie als Kühlschmierstoffe in der Metallbearbeitung eingesetzt werden, mit einem emulgierten Ölgehalt von 5 Gew.-% wurde mit 2 kg aktiv o-Phenyl-phenol / t 5 %igen Kühlschmierstoff konserviert.
(2 kg aktiv o-Phenylphenol / t 5 %igen Kühlschmierstoff = ca. 4 kg 50 %ige Lösung / t 5 %igen Kühlschmierstoff)
Eine Blindprobe wurde auf die gleiche Weise hergestellt, jedoch ohne Konservierungsmittel.

### Resultate:

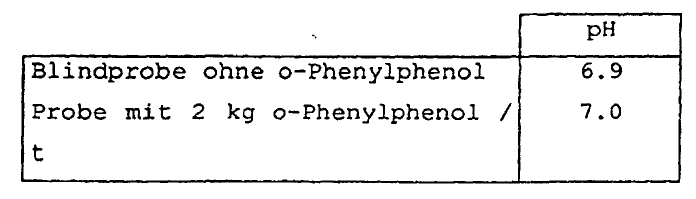

In der Blindprobe wurde nach 24 Std. eine Keimzahl von 10⁷/g gemessen.
In der Probe mit 2 kg *o*-Phenylphenol / t Kühlschmierstoff wurde nach 24 Std. eine Keimzahl von < 100 / g gemessen.
Trotz der hohen notwedigen Menge an Konservierungsmittel wurde der pH-Wert des Kühlschmierstoffs durch die erfindungsgemässe Teilneutralisation von o-Phenylphenol nicht beeinflusst.

### Beispiel 14

Eine Phenol-Lösung wurde hergestellt durch Lösen von 25 g Phenol unter Verwendung von 25 g Monopropylenglykol, 25 g Ethylenglykol, 1 g NaOH und 24 g Wasser, so dass 100 g einer ca. 25 Gew.-%igen Lösung bezogen auf Phenol erreicht wurde.

### Resultate:

### Gef rierpunkt: unterhalb - 18°C

Bei - 15°C war die Lösung immer noch flüssig und klar. Es konnte keine Kristallisation beobachtet werden.
Bei - 10°C betrug die Viskosität < 500 mPas. Durch die tiefe Viskosität bei - 10°C ist das Produkt auch unterhalb des Gefrierpunkts von Wasser leicht pumpbar.

### Beispiel 15

Eine m-Kresol-Lösung wurde hergestellt durch Lösen von 25 g m-Kresol unter Verwendung von 50 g Monopropylenglykol, 2 g NaOH und 23 g Wasser, so dass 1 kg einer ca. 25 Gew.-%igen Lösung bezogen auf m-Kresol erreicht wurde.

### Resultate:

### Gefrierpunkt: unterhalb - 18°C

Bei - 15°C war die Lösung immer noch flüssig und klar. Es konnte keine Kristallisation beobachtet werden.
Bei - 10°C betrug die Viskosität < 500 mPas. Durch die tiefe Viskosität bei - 10°C ist das Produkt auch unterhalb des Gefrierpunkts von Wasser leicht pumpbar.

### Beispiel 17

Eine o-Phenylphenol / 2-Methyl-4-isothiazolinon-Lösung wurde hergestellt durch Lösen von 25 g o-Phenylphenol und 12,5 g 2-Methyl-4-isothiazolinon unter Verwendung von 20 g Monopropylenglykol und 20 g Benzylalkohol und 2,5 g NaOH und 20 g Wasser, so dass eine 25 Gew.-%ige Lösung bezogen auf *o*-Phenylphenol und 12,5 gew.-%ige Lösunge bezogen auf MIT erreicht wurde.
Der Neutralisierungsgrad der Phenolgruppen von o-Phenylphenol mit NaOH betrug ca. 43,5 Mol-%.

### Resultate:

### Gefrierpunkt: unterhalb -18°C

Bei -18°C war die Läsung immer noch flüssig, viskos und klar.Es konnte keine Kristallisation beobachtet werden.

## Patentansprüche

1. Wässrige Suspension oder Dispersion von Mineralien, Füllstoffen und/oder Pigmenten, mit einem mikrobiziden Mittel in Form einer Lösung, enthaltend Derivate des Phenols in teilneutralisierter Form sowie ein oder mehrere Glykolverbindungen und/oder Glycerin, wobei das mikrobizide Mittel in Form einer Lösung über 25 Gew.-% des Phenolderivats enthält.

2. Suspension oder Dispersion nach Anspruch 1,
**dadurch gekennzeichnet, daß**
das mikrobizide Mittel als Phenolderivate einfach oder mehrfach substituierte Phenole mit aliphatischen und/oder aromatischen Substituenten und als Glykolverbindung aliphatische Glykolverbindungen enthält.

3. Suspension oder Dispersion nach Anspruch 1 oder 2,
**dadurch gekennzeichnet, daß**
das mikrobizide Mittel als Phenolderivate o-Phenylphenol und/oder halogenierte Phenole und/oder Kresole und/oder halogenierte Kresole und/oder Resorcine und/oder Parahydroxybenzoesäureester (PHB-Ester) enthält.

4. Suspension oder Dispersion nach einem oder mehreren der vorhergehenden Ansprüche,
**dadurch gekennzeichnet, daß**
das mikrobizide Mittel als Kresole o-, m-, p-Kresol, Isopropyl-o-kresol, 4-Isopropyl-m-kresol, halogenierte Kresole, insbesondere chlorierte Kresole, und als Resorcine 4-n-Hexylresorcin enthält.

5. Suspension oder Dispersion nach einem oder mehreren der vorhergehenden Ansprüche,
**dadurch gekennzeichnet, daß**
das mikrobizide Mittel als aliphatische Glykolverbindungen Ethylenglykol, Monopropylenglykol und/oder Diethylenglykol enthält.

6. Suspension oder Dispersion nach einem oder mehreren der vorhergehenden Ansprüche,
**dadurch gekennzeichnet, daß**
die Phenolderivate in dem mikrobiziden Mittel mit Alkalihydroxiden teilneutralisiert vorliegen.

7. Formulierung nach einem oder mehreren der vorhergehenden Ansprüche,
**dadurch gekennzeichnet, daß**
die Phenolderivate in dem mikrobiziden Mittel mit KOH odder NaOH teilneutralisiert sind.

8. Suspension oder Dispersion nach einem oder mehreren der vorhergehenden Ansprüche,
**dadurch gekennzeichnet, daß**
die Phenolderivate in dem mikrobiziden Mittel zu 5-95 Mol-%, bevorzugt 5-80 Mol-% teilneutralisiert vorliegen.

9. Suspension oder Dispersion nach einem oder mehreren der vorhergehenden Ansprüche,
**dadurch gekennzeichnet, daß**
die Phenolderivate in dem mikrobiziden Mittel zu 5-95 Mol-%, bevorzugt 5-60 Mol-%, weiterhin bevorzugt 5-30 Mol-% für den späteren Einsatz im pH-Bereich 6-8, zu 20-50 Mol-%, bevorzugt 20-40 Mol-% für den späteren Einsatz im pH-Bereich 7-9, zu 30-70 Mol-%, bevorzugt 30-50 Mol-% für den späteren Einsatz im pH-Bereich 8-10 und zu 50-80 Mol-%, bevorzugt 50-70 Mol-% für den späteren Einsatz im pH-Bereich von 9 -11 teilneutralisiert vorliegen.

10. Suspension oder Dispersion nach einem oder mehreren der vorhergehenden Ansprüche,
**dadurch gekennzeichnet, daß**
das mikrobizide Mittel weiterhin einen oder mehrere aromatische Alkohole enthält.

11. Suspension oder Dispersion nach einem oder mehreren der vorhergehenden Ansprüche,
**dadurch gekennzeichnet, daß** die Phenolderivate in dem mikrobiziden Mittel in einer Menge von 25-50 Gew.-%, besser 25-40 Gew.-% vorliegen und als organisches Lösungsmittel aliphatische Glykolverbindungen und/oder Glycerin in einer Menge von 20-90 Gew.-%,besser 40-80 Gew.-% und wahlweise aromatische Alkohole in einer Menge von 0-70 Gew-%, bevorzugt 0-50 Gew.-% in der Formulierung vorliegen, wobei der Gesamtanteil an organischen Lösungsmitteln 40-90 Gew.-% beträgt und die Differenz zu jeweils 100 Gew.-% Alkalihydroxid und Wasser ist.

12. Suspension oder Dispersion nach einem oder mehreren der vorhergehenden Ansprüche,
**dadurch gekennzeichnet, daß**
das mikrobizide Mittel als aromatische Alkohole Verbindungen der nachfolgenden Formel enthält: 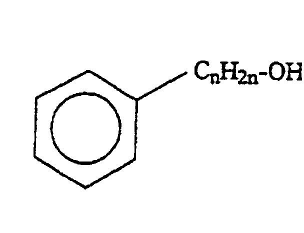 und wahlweise in o-, m- und/oder p-Stellung ein weiterer Substituent R vorliegt, wobei R bevorzugt ein geradkettiger oder verzweigter aliphatischer Substituent mit der Formel -CₙH₂ₙ₊₁ ist, wobei n = 1-5, bevorzugt 1-3, weiterhin bevorzugt 1.

13. Suspension oder Dispersion nach einem oder mehreren der vorhergehenden Ansprüche,
**dadurch gekennzeichnet, daß**
das mikrobizide Mittel als aromatische Alkohole Benzylalkohol und/oder 2-Phenylethan-1-ol und/oder 3-Phenylpropan-1-ol und/oder 1-Phenylpropan-2-ol oder 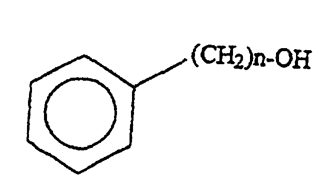 wobei n = 1-5, bevorzugter 1-3, weiterhin bevorzugt 1, enthält.

14. Suspension oder Dispersion nach einem oder mehreren der vorhergehenden Ansprüche,
**dadurch gekennzeichnet, daß** das mikrobizide Mittel weitere mikrobizid wirkende Stoffe enthält.

15. Verwendung einer Suspension oder Dispersion nach einem oder mehreren der vorhergehenden Ansprüche,
**dadurch gekennzeichnet, daß**
die Suspension oder Dispersion bei der Papierherstellung, Papierbeschichtung, in wässrigen Lacken und in Farben eingesetzt wird.

## Claims

1. Aqueous suspension or dispersion of minerals, fillers and/or pigments, with a microbicidal agent in the form of a solution, comprising derivatives of phenol in partially neutralized form as well as one or more glycol compounds and/or glycerol, wherein the microbicidal agent in the form of a solution contains more than 25 wt. % of said phenol derivative.

2. Suspension or dispersion according to claim 1 **characterized in that** said microbicidal agent contains as the phenol derivatives mono- or multisubstituted phenols with aliphatic and/or aromatic substituents, and as the glycol compound aliphatic glycol compounds.

3. Suspension or dispersion according to claim 1 or 2 **characterized in that** said microbicidal agent contains as the phenol derivatives o-phenylphenol and/or halogenated phenols and/or cresols and/or halogenated cresols and/or resorcinols and/or parahydroxybenzoic esters (PHB esters).

4. Suspension or dispersion according to one or more of the preceding claims **characterized in that** said microbicidal agent contains as the cresols o-, m-, p- cresol, isopropyl-o-cresol, 4-isopropyl-m-cresol, halogenated cresols, in particular chlorinated cresols, and as the resorcinols 4-n-hexylresorcinol.

5. Suspension or dispersion according to one or more of the preceding claims **characterized in that** said microbicidal agent contains as the aliphatic glycol compounds ethylene glycol, monopropylene glycol and/or diethylene glycol.

6. Suspension or dispersion according to one or more of the preceding claims **characterized in that** said phenol derivatives in the microbicidal agent are present in a form partially neutralized by alkali hydroxides.

7. Suspension or dispersion according to one or more of the preceding claims **characterized in that** said phenol derivatives in the microbicidal agent are partially neutralized by KOH or NaOH.

8. Suspension or dispersion according to one or more of the preceding claims **characterized in that** said phenol derivatives in the microbicidal agent are present partially neutralized to a degree of 5 - 95 mole %, preferably 5 - 80 mole %.

9. Suspension or dispersion according to one or more of the preceding claims **characterized in that** said phenol derivatives in the microbicidal agent are present partially neutralized to a degree of 5 - 95 mole %, preferably 5 - 60 mole %, further preferred 5 - 30 mole %, for later use in a pH range of 6-8; 20-50 mole %, preferably 20-40 mole %, for later use in a pH range of 7-9; 30-70 mole %, preferably 30-50 mole %, for later use in a pH range of 8-10; and 50-80 mole %, preferably 50-70 mole % for later use in a pH range of 9-11.

10. Suspension or dispersion according to one or more of the preceding claims **characterized in that** said microbicidal agent further contains one or more aromatic alcohols.

11. Suspension or dispersion according to one or more of the preceding claims **characterized in that** said phenol derivatives in the microbicidal agent are present in an amount of 25-50 % by wt., more desirable 25-40 % by wt., and as the organic solvent aliphatic glycol compounds and/or glycerol are present in an amount of 20-90 % by wt., more desirable 40-80 % by wt., and optionally aromatic alcohols are present in the formulation in an amount of 0-70 % by wt., preferably 0-50 % by wt., wherein the total proportion of organic solvents is 40-90 % by wt. and the balance to 100 % by wt. in each case is alkali hydroxide and water.

12. Suspension or dispersion according to one or more of the preceding claims **characterized in that** said microbicidal agent contains as the aromatic alcohols compounds having the following formula: 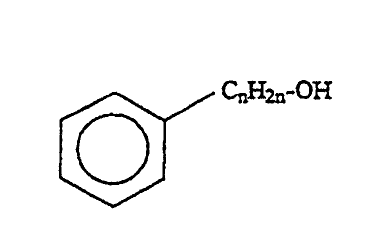 and optionally another substituent R is present in positions o, m or p, where R preferably is a straight chain or branched aliphatic substituent having the formula -CₙH₂ₙ₊₁, wherein n = 1-5, preferably 1-3, further preferred 1.

13. Suspension or dispersion according to one or more of the preceding claims **characterized in that** said microbicidal agent contains as the aromatic alcohols benzyl alcohol and/or 2-phenylethane-1-o1 and/or 3-phenylpropane-1-o1 and/or 1-phenylpropane-2-o1 or 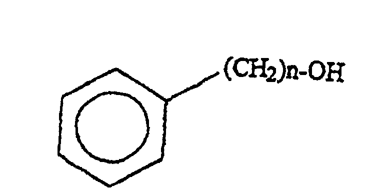 wherein n = 1-5, more preferably 1-3, further preferred 1.

14. Suspension or dispersion according to one or more of the preceding claims **characterized in that** said microbicidal agent contains additional substances with microbicidal activity.

15. Use of a suspension or dispersion according to one or more of the preceding claims **characterized in that** said suspension or dispersion is employed in papermaking, in paper coating, in aqueous lacquers and varnishes and paints.

## Revendications

1. Suspension ou dispersion aqueuse de minéraux, charges et/ou pigments, comportant un agent microbicide sous forme d'une solution, contenant des dérivés du phénol sous forme partiellement neutralisée ainsi qu'un ou plusieurs glycols et/ou du glycérol, l'agent microbicide sous forme d'une solution contenant plus de 25 % en poids du dérivé phénolique.

2. Suspension ou dispersion selon la revendication 1, **caractérisée en ce que** l'agent microbicide contient en tant que dérivés phénoliques des phénols une ou plusieurs fois substitués comportant des substituants aliphatiques et/ou aromatiques et, en tant que glycol, des glycols aliphatiques.

3. Suspension ou dispersion selon la revendication 1 ou 2, **caractérisée en ce que** l'agent microbicide contient en tant que dérivés phénoliques de l'o-phénylphénol et/ou des phénols halogénés et/ou des crésols et/ou des crésols halogénés et/ou des résorcinols et/ou des esters d'acide p-hydroxybenzoïque (esters de PHB).

4. Suspension ou dispersion selon une ou plusieurs des revendications précédentes, **caractérisée en ce que** l'agent microbicide contient en tant que crésols de I'o-, m-, p-crésol, de l'isopropyl-o-crésol, du 4-isopropyl-m-crésol, des crésols halogénés, en particulier des crésols chlorés, et, en tant que résorcinols, du 4-n-hexylrésorcinol.

5. Suspension ou dispersion sefon une ou plusieurs des revendications précédentes, **caractérisée en ce que** l'agent microbicide contient en tant que glycols aliphatiques de l'éthylèneglycol, du monopropylèneglycol et/ou du diéthylèneglycol.

6. Suspension ou dispersion selon une ou plusieurs des revendications précédentes, **caractérisée en ce que** les dérivés phénoliques dans l'agent microbicide sont présents à l'état partiellement neutralisé par des hydroxydes de métaux alcalins.

7. Suspension ou dispersion selon une ou plusieurs des revendications précédentes, **caractérisée en ce que** les dérivés phénoliques dans l'agent microbicide sont partiellement neutralisés par KOH ou NaOH.

8. Suspension ou dispersion selon une ou plusieurs des revendications précédentes, **caractérisée en ce que** les dérivés phénoliques dans l'agent microbicide sont présents à l'état partiellement neutralisé à raison de 5 à 95 % en moles, de préférence de 5 à 80 % en moles.

9. Suspension ou dispersion selon une ou plusieurs des revendications précédentes, **caractérisée en ce que** les dérivés phénoliques dans l'agent microbicide sont présents à l'état partiellement neutralisé à raison de 5 à 95 % en moles, de préférence de 5 à 60 % en moles, de façon particulièrement préférée de 5 à 30 % en moles pour l'utilisation ultérieure dans l'intervalle de pH de 6 à 8, à raison de 20 à 50 % en moles, de préférence de 20 à 40 % en moles pour l'utilisation ultérieure dans l'intervalle de pH de 7 à 9, à raison de 30 à 70 % en moles, de préférence de 30 à 50 % en moles pour l'utilisation ultérieure dans l'intervalle de pH de 8 à 10 et à raison de 50 à 80 % en moles, de préférence de 50 à 70 % en moles pour l'utilisation ultérieure dans l'intervalle de pH de 9 à 11.

10. Suspension ou dispersion selon une ou plusieurs des revendications précédentes, **caractérisée en ce que** l'agent microbicide contient en outre un ou plusieurs alcools aromatiques.

11. Suspension ou dispersion selon une ou plusieurs des revendications précédentes, **caractérisée en ce que** les dérivés phénoliques sont présents dans l'agent microbicide en une quantité de 25 à 50 % en poids, encore mieux de 25 à 40 % en poids et, en tant que solvant organique, des glycols aliphatiques et/ou du glycérol sont présents dans la composition en une quantité de 20 à 90 % en poids, encore mieux de 40 à 80 % en poids, et, si on le désire, des alcools aromatiques sont présents dans la composition en une quantité de 0 à 70 % en poids, de préférence de 0 à 50 % en poids, la quantité totale des solvants organiques allant de 40 à 90 % en poids et la différence par rapport à 100 % en poids consistant chaque fois en un hydroxyde de métal alcalin et eau.

12. Suspension ou dispersion selon une ou plusieurs des revendications précédentes, **caractérisée en ce que** l'agent microbicide contient en tant qu'alcools aromatiques des composés de formule suivante : 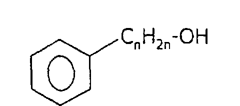 et si on le désire un autre substituant R se trouve en position ortho, méta et/ou para, R étant de préférence un substituant aliphatique à chaîne droite ou ramifiée, de formule -CₙH₂ₙ₊₁, n allant de 1 à 5, de préférence de 1 à 3, de façon particulièrement préférée étant égal à 1.

13. Suspension ou dispersion selon une ou plusieurs des revendications précédentes, **caractérisée en ce que** l'agent microbicide contient en tant qu'alcools aromatiques de l'alcool benzylique et/ou du 2-phényléthan-1-ol et/ou du 3-phénylpropan-1-ol et/ou du 1-phénylpropan-2-ol ou 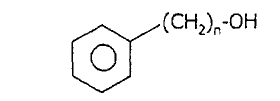 n allant de 1 à 5, de préférence de 1 à 3, de façon particulièrement préférée étant égal à 1.

14. Suspension ou dispersion selon une ou plusieurs des revendications précédentes, **caractérisée en ce que** l'agent microbicide contient d'autres substances à action microbicide.

15. Utilisation d'une suspension ou dispersion selon une ou plusieurs des revendications précédentes, **caractérisée en ce que** la suspension ou dispersion est utilisée dans la fabrication du papier, le couchage du papier, dans des peintures à l'eau et dans des encres.
